# EUROPÄISCHE PATENTSCHRIFT

(11) **EP 2 698 087 B1**
(45) Veröffentlichungstag und Bekanntmachung des Hinweises auf die Patenterteilung: **17.12.2014**
(21) Anmeldenummer: 13180496.5
(22) Anmeldetag: 15.08.2013
(51) Int. Cl.: A47J 31/46

(54) **Pumpenmodul**
Pump module
Module de pompe

(30) Priorität: 16.08.2012 DE 102012214584
(43) Veröffentlichungstag der Anmeldung: 19.02.2014
(73) Patentinhaber: WMF WÜRTTEMBERGISCHE METALLWARENFABRIK AG, 73309 Geislingen/Steige (DE)
(72) Erfinder: Dollner, Sander, 89079 Ulm-Wiblingen (DE); Arndt, Peter, 89134 Blaustein (DE)
(74) Vertreter: BRP Renaud & Partner mbB Rechtsanwälte Patentanwälte Steuerberater

(56) Entgegenhaltungen:
- EP-A1- 2 160 965
- WO-A1-2011/115925
- US-A1- 2012 097 043

## Beschreibung

Die vorliegende Erfindung betrifft ein Pumpenmodul mit einer Aufnahme, einer Fixiereinrichtung und einem aus mehreren Komponenten bestehenden Pumpenkopf. Die Erfindung betrifft außerdem einen mit einem derartigen Pumpenmodul ausgestatteten Getränkeautomaten.

Zum Stand der Technik gehören bspw. die Dokumente US2012/097043, WO2011/ 115 925, EP 2 160 965.

Moderne Getränkeautomaten, wie beispielsweise Kaffeevollautomaten bieten neben der Zubereitung und Ausgabe von frischem Kaffee auch die Möglichkeit der vollautomatischen Zubereitung von Kaffeemixgetränken mit heißer oder kalter Milch oder heißem oder kaltem Milchschaum. Die Ansprüche an die Schaumqualität die Temperaturkonstanz und die Effektivität, mit der ein Schäumgas in der Milch emulgiert werden soll, steigen dabei ständig. Zur Förderung und Erwärmung der Milch zur Vorbereitung der Milchschaumerzeugung werden oftmals Verdrängerpumpen in der Art von Zahnradpumpen eingesetzt, die üblicherweise nur über sogenannte CIP-Verfahren (Clean-In-Place) also Vorortreinigungsverfahren reinigbar sind. Hierbei muss sich der Maschinenbediener auf die Reinigungsmethode verlassen können, da er keinerlei Einblick in den Reinigungsprozess hat und daher das Reinigungsergebnis auch nicht kontrollieren kann. Zudem sind derartige Pumpen bei ausreichender Qualität äußerst kostenintensiv und im Falle eines Defekts der Pumpe oder einzelner Komponenten derselben nur schwer oder zu hohen Kosten zu warten. Ein weiterer Nachteil beim Einsatz konventioneller, das heißt insbesondere geschlossener, Pumpen ist, dass diese für den Einsatz in Kaffeemaschinen modifiziert werden müssen, bzw. mit Verbindungselementen versehen werden müssen, welche nur vom Servicetechniker getrennt bzw. wieder verbunden werden können, was einen unnötig langen Stillstand der Kaffeemaschine zur Folge hat. Dies betrifft vor allem auch Zuführleitungen für Reinigungsmittel sowie Zuführleitungen für Luft, deren Abdichtung ausreichend druckfest ausgeführt werden muss. Ein weiteres Hauptproblem ist das Zusetzen der zur Erzeugung von Milchschaum notwendigen, druckseitigen Blende durch Ablagerungen bzw. Fremdkörper im Medium.

Aus der EP 2 326 224 B1 ist eine Pumpe bekannt, die ebenfalls ausschließlich im CIP-Verfahren reinigbar ist und dafür Mittel zum Liefern von Dampf aufweist. Die Reinigung gerade Milch berührter Komponenten mittels Dampf ist jedoch ebenfalls nicht optimal, da durch die hohe Temperatur Eiweiß ausfallen und an den einzelnen Komponenten anbacken kann, wodurch es wiederum zu Funktionsbeeinträchtigungen oder sogar zum Ausfall der Pumpe kommen kann.

Im Gegensatz zu vollständig geschlossenen Pumpen gibt es sich demontierbare Pumpen, beispielsweise bekannt aus der DE 10 2008 028 059 A1, bei welcher eine Verdrängerpumpe für Flüssigkeiten, ein Pumpengehäuse und zumindest zwei in Wirkverbindung zueinanderstehende Förderelemente aufweist, die im Pumpengehäuse der Verdrängerpumpe drehbar gelagert sind. Das Pumpengehäuse ist dabei zu öffnen und die Förderelemente zu entnehmen, wodurch die gesamte Pumpe vergleichsweise einfach zu reinigen ist. Hierbei handelt es sich lediglich um eine reine Förderpumpe.

Aus der DE 10 2008 039 973 A1 ist eine Exzenterschneckenpumpe für Flüssigkeiten bekannt, die wiederum demontierbar und dadurch leicht zu reinigen ist. Gleichzeitig erfolgt hier ein Antrieb mittels magnetischer Feldkräfte, so dass kein direkter Kontakt zwischen Antrieb und zu förderndem Medium besteht.

Die vorliegende Erfindung beschäftigt sich mit dem Problem, für ein Pumpenmodul eine verbesserte Ausführungsform anzugeben, welches einerseits kompakt baut und andererseits kostengünstig herzustellen ist und welches zugleich einfach zu reinigen und zu warten ist.

Dieses Problem wird erfindungsgemäß durch die Gegenstände der unabhängigen Ansprüche gelöst. Vorteilhafte Ausführungsformen sind Gegenstand der abhängigen Ansprüche.

Die vorliegende Erfindung beruht auf dem allgemeinen Gedanken, ein Pumpenmodul mit einer Aufnahme, einer Fixiereinrichtung und einem aus mehreren Komponenten bestehenden Pumpenkopf auszubilden, wobei in der Aufnahme zumindest ein Anschluss, beispielsweise ein Anschluss für ein Schäumgas oder ein Anschluss für ein Reinigungsmedium vorgesehen ist. Zugleich ist der Pumpenkopf nicht aus einem Teil ausgebildet, sondern zerlegbar und damit auch leicht reinigbar, wobei der Pumpenkopf zugleich mittels der Fixiereinrichtung in der Aufnahme fixierbar ist und zwar derart, dass zum einen die einzelnen Komponenten des Pumpenkopfes dicht miteinander verklemmt sind und zum anderen der Pumpenkopf dicht mit dem zumindest einen Anschluss der Aufnahme verbunden ist. Hierdurch lässt sich eine Pumpe schaffen, die auch zum Fördern von verderblichen Flüssigkeiten, wie beispielsweise Milch eingesetzt werden kann, da der Pumpenkopf auch von einem Benutzer, das heißt von einem Laien, bei Bedarf ausgebaut, zerlegt und leicht gereinigt werden kann. Zugleich sind die einzelnen Komponenten des Pumpenkopfes, das heißt beispielsweise ein Pumpengehäuse, zwei darin gelagerte Verdrängerelemente, insbesondere zwei Zahnräder, sowie ein das Pumpengehäuse verschließender Deckel als einfache Teile ausgebildet, so dass das gesamte Pumpenmodul kostengünstig herzustellen ist. Sollte insbesondere im Bereich der Verdrängerelemente ein Verschleiß auftreten, so ist es selbst dem Laien möglich, einzelne verschlissene Teile, beispielsweise Zahnräder, einfach auszutauschen, ohne dass hierfür fachkundiges Servicepersonal erforderlich wäre. Zum Ein- und Ausbau des Pumpenmoduls muss lediglich die Fixiereinrichtung, die beispielsweise als Schnellverschluss, Spannbügel, Bajonettverschluss o. dgl. ausgebildet sein kann, gelöst und der Pumpenkopf aus der Aufnahme entfernt werden. Zum Einbau wird der Pumpenkopf wieder in die Aufnahme eingedrückt und mittels der Fixiereinrichtung darin verspannt bzw. fixiert. In der Aufnahme ist zumindest ein Anschluss, vorzugsweise jedoch sogar mehrere Anschlüsse vorhanden, so dass am eigentlichen Pumpenkopf lediglich beispielsweise nur noch ein Zu- und ein Ablauf oder gar keine weiteren Anschlüsse mehr vorhanden sind, so dass durch ein Einsetzen des Pumpenkopfs in der Aufnahme und ein Fixieren desselben mittels der Fixiereinrichtung gleichzeitig ein Verbinden mit sämtlichen erforderlichen Leitungen ermöglicht, ohne dass hierfür weitere separate Kupplungen bzw. Verbindungen geschlossen werden müssten. Denkbar ist aber selbstverständlich auch, dass am eigentlichen Pumpenkopf ein Zu- und ein Ablauf angeordnet sind, wobei der Zu- und der Ablauf in eine vergleichsweise druckreduzierten Bereich liegen, so dass hier eine Zuleitung bzw. eine Ableitung beispielsweise als einfach zu lösende bzw. als einfach zu fixierende Steckverbindung ausgebildet werden kann. Die einzelnen Komponenten des Pumpenkopfes können dabei beispielsweise als Kunststoffspritzgussteile ausgebildet sein, wodurch der gesamte Pumpenkopf und darüber auch das Pumpenmodul vergleichsweise kostengünstig hergestellt werden können.

Zweckmäßig ist eine Antriebseinrichtung vorgesehen, die mit der Aufnahme verbindbar ist und über die die Verdrängerelemente, insbesondere berührungslos, antreibbar sind. Eine derartige Antriebseinrichtung kann beispielsweise in der Art eines Elektromotors ausgebildet sein, der mit einer Welle das Pumpengehäuse des Pumpenkopfes durchdringt und mit zumindest einem der Verdrängerelemente, das heißt beispielsweise einem der Zahnräder, in drehfester Verbindung steht. Eine Abdichtung des Pumpengehäuses kann dabei über eine herkömmliche Wellendichtung erfolgen. Alternativ ist auch vorstellbar, dass am Rotor bzw. an der sich drehenden Welle der Antriebseinrichtung ein Magnet angeordnet ist, wodurch mittels der Übertragung magnetischer Feldkräfte ein Antrieb des dann ebenfalls magnetisierbaren bzw. magnetischen Verdrängerelements erfolgt. Dies bietet den großen Vorteil, dass das Pumpengehäuse an sich geschlossen ausgebildet werden kann, so dass insbesondere schlecht zu reinigende Stelle, wie beispielsweise an einem Durchbruch durch das Pumpengehäuse, entfallen. Derartige berührungslose Antriebe bieten darüber hinaus große Vorteile hinsichtlich des Verschleißes.

Bei einer weiteren vorteilhaften Ausführungsform der erfindungsgemäßen Lösung weist die Fixiereinrichtung einen schwenkbaren Spannbügel auf, mit dem der Pumpenkopf in die Aufnahme eindrückbar ist und der mittels eines Riegels fixierbar ist. Der Spannbügel gewährleistet dabei in geschlossenem Zustand ein festen Eindrücken des Pumpenmoduls in die Aufnahme und damit sowohl ein Abdichten des Zusammendrücken der einzelnen Komponenten des Pumpenkopfes, das heißt beispielsweise des Deckels und des Pumpengehäuses, als auch ein dichtes Verbinden des Pumpenkopfes mit den jeweiligen Anschlüssen in der Aufnahme, beispielsweise einem Reinigungsmediumanschluss bzw. einem Schäumgasanschluss. Am Deckel des Pumpengehäuses können darüber hinaus zwei Pins angeordnet sein, die bei geschlossener Fixiereinrichtung in entsprechende am Spannbügel angeordnete Öffnungen eingreifen und dadurch sowohl ein Fixieren als auch ein Ausrichten des Deckels bzw. des Pumpenkopfes bezüglich der Aufnahme bewirken. Derartige Pins bzw. Öffnungen können generell auch allgemein als Ausrichtkonturen ausgebildet sein, die bei geschlossenem Spannbügel eine eindeutige und vordefinierte Lage des Pumpenkopfes in der Aufnahme erzwingen. Alternativ ist auch denkbar, dass der Deckel Bestandteil der Fixiereinrichtung bzw. des Spannbügels ist, bzw. an dieser/diesem angebunden ist. Die Abdichtung zwischen dem Deckel und dem Pumpengehäuse des Pumpenkopfes sowie beispielsweise zwischen dem Pumpengehäuse und den einzelnen Anschlüssen in der Aufnahme kann dabei über einfache O-Ringdichtungen wie auch über jegliche andere Art von Form- oder Deckeldichtungen erfolgen, wobei eine Dichtung des Pumpengehäuses zum Zu-Ablauf über einen einfachen an dem Pumpengehäuse angeformten Stutzen erfolgt, auf welchen ein dehnbarer Schlauch, beispielsweise ein Silikonschlauch, druckdicht aufgeschoben wird. Der Stutzen ist dabei vorzugsweise einstückig mit dem Pumpengehäuse ausgebildet.

Zweckmäßig ist zudem ein Blendenelement vorgesehen, welches am Ablauf des Pumpenkopfes anschließbar ist. Durch die leichte Zugänglichkeit und die leichte Montage bzw. Demontage des Blendenelementes vom Pumpengehäuse kann darüber hinaus ein leichtes und sauberes Reinigen desselben erfolgen, wodurch insbesondere die Funktion des Blendenelements beeinträchtigende Anhaftungen zuverlässig vermieden werden können. Eine dichte Verbindung zwischen Blendenelement und Pumpengehäuse bzw. zwischen Blendenelement und Ablauf (Silikonschlauch) kann wiederum über die zuvor erwähnten dichtenden Steckverbindungen erzielt werden. Ein derartiges Blendenelement ist prinzipiell zur Erzeugung von Milchschaum erforderlich.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1: ein erfindungsgemäßes Pumpenmodul in einem in einem Getränkeautomaten eingebauten Zustand,
- Fig. 2: eine Darstellung wie in Fig. 1, jedoch bei geöffnetem Spannbügel,
- Fig. 3: eine Explosionsdarstellung eines Pumpenkopfes des Pumpenmoduls,
- Fig. 4: eine Darstellung wie in Fig. 2, jedoch ohne Pumpenkopf,
- Fig. 5a-d: eine weitere mögliche Ausführungsform des Pumpenmoduls mit einem Bajonettverschluss zum Fixieren des Pumpenkopfes in der zugehörigen Aufnahme in unterschiedlichen Schritten.

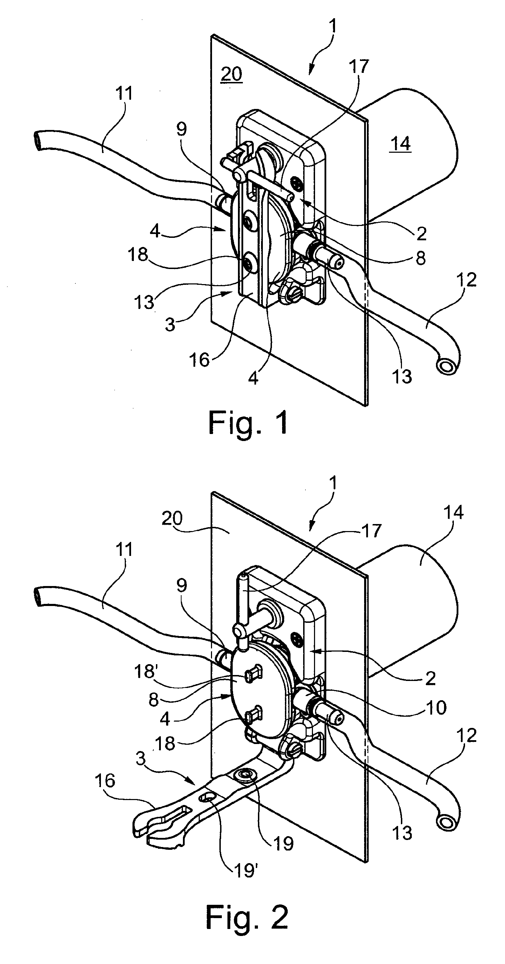

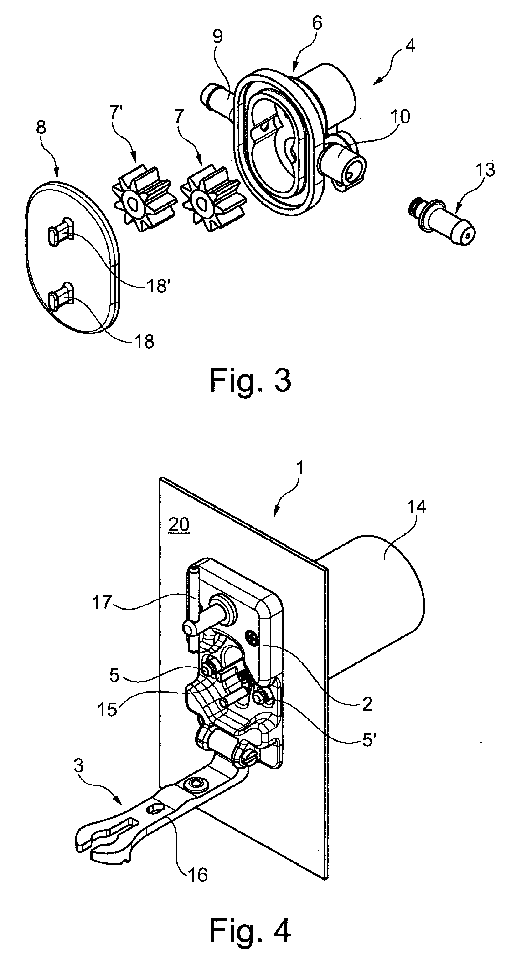

Entsprechend den Fig. 1 und 2, weist ein erfindungsgemäßes Pumpenmodul 1 eine Aufnahme 2, eine Fixiereinrichtung 3 sowie einen aus mehreren Komponenten bestehenden Pumpenkopf 4 auf. In der Aufnahme 2 ist dabei zumindest ein Anschluss 5, 5' vorgesehen, hier sogar zwei Anschlüsse, nämlich ein Anschluss 5 für ein Reinigungsmedium sowie ein Anschluss 5' für ein Schäumgas (vgl. Fig. 4). Generell kann über den Anschluss 5' somit Reinigungsflüssigkeit bzw. Spülflüssigkeit zugeführt werden. Erfindungsgemäß ist nun der Pumpenkopf 4 zerlegbar, wie dies beispielsweise gemäß der Fig. 3 dargestellt ist, und dadurch äußerst leicht zu reinigen. Um den Pumpenkopf 4 vergleichsweise einfach aus der Aufnahme 2 des Pumpenmoduls 1 entnehmen und damit reinigen zu können, wird der Pumpenkopf 4 mittels der Fixiereinrichtung 3 in der Aufnahme 2 derart fixiert, dass zum Einen die einzelnen Komponenten des Pumpenkopfes 4, hier also ein Pumpengehäuse 6, zwei darin gelagerte Verdrängerelemente 7 und 7', insbesondere zwei Zahnräder, und ein das Pumpengehäuse 6 verschließender Deckel 8 (vgl. Fig. 3), dicht miteinander verklemmt sind und zum Anderen der Pumpenkopf 4 dicht mit den zumindest einen Anschluss 5, 5' der Aufnahme 2 verbunden ist. Das Pumpenmodul 1 und insbesondere der Pumpenkopf 4 desselben können somit wahlweise durch Durchströmen mit einem Reinigungsmittel aus dem Reinigungsmediumanschluss 5 gereinigt werden oder aber beispielsweise zu einer Grundreinigung komplett aus der Aufnahme 2 entnommen und dann zerlegt werden, wobei im zerlegten Zustand die einzelnen Komponenten 6, 7, 7' und 8 individuell gereinigt werden können.

Betrachtet man die Fig. 1 bis 3, so kann man erkennen, dass am Pumpengehäuse 6 ein Zulauf 9 sowie ein Ablauf 10 angeordnet sind, wobei am Zulauf 9 eine Zuführleitung 11, beispielsweise ein Silikonschlauch, angeschlossen ist, ebenso wie am Ablauf 10 eine Abführleitung 12 in der Art eines Silikonschlauches angeschlossen ist. Zwischen dem Ablauf 10 am Pumpengehäuse 6 und der Abführleitung 12 ist ein Blendenelement 13 eingesteckt, welches zur Erzeugung von Milchschaum unerlässlich ist. Generell können selbstverständlich der Zulauf 9 und der Ablauf 10 ebenfalls in Form von geeigneten Anschlüssen in der Aufnahme 2 ausgebildet sein, so dass bei einem Einsetzen des Pumpenkopfes 4 in die Aufnahme 2 nicht nur die Anschlüsse 5, 5' mediumdicht mit der Aufnahme 2 verbunden werden, sondern zugleich auch der Zu- und Ablauf 9, 10. Diese Ausführungsform ist in den Zeichnungen jedoch nicht dargestellt. Selbstverständlich können auch die Anschlüsse 5, 5' im Bereich des Zulaufs 9 und/oder des Ablaufs 10 angeordnet werden.

Betrachtet man die Fig. 1 bis 4 weiter, so kann man erkennen, dass zum Antrieb der Verdrängerelemente 7, 7' eine Antriebseinrichtung 14, beispielsweise ein Elektromotor, vorgesehen ist, die mit der Aufnahme 2 verbindbar ist. Eine Drehmomentübertragung von der Antriebseinrichtung 14 auf eines der beiden Verdrängerelemente 7, 7' kann beispielsweise mittels einer Antriebswelle 15 (vgl. Fig. 4) erfolgen, wobei die Antriebswelle 15 durch eine entsprechende Durchgangsöffnung am Pumpengehäuse 6 hindurchtritt. Alternativ und besonders bevorzugt ist auch ein berührungsloser Antrieb denkbar, bei welchem der Antrieb der Verdrängerelemente 7, 7' mittels magnetischer Feldkräfte erfolgt. Generell ist selbstverständlich eines der beiden Verdrängerelemente 7, 7' angetrieben, welches dann über beispielsweise eine Verzahnung das andere Verdrängerelement 7', 7 mitbewegt.

Betrachtet man die Fig. 1 und 2, so kann man erkennen, dass die Fixiereinrichtung 3 einen Spannbügel 16 aufweist, mit dem der Pumpenkopf in die Aufnahme 2 eindrückbar ist und der mittels eines Riegels 17 fixierbar ist. Bei dem Riegel 17 handelt es sich um einen Drehriegel, der in eine entsprechende Aufnahme am Spannbügel 16 eingreift und dann in der Art eines Bajonettverschlusses verdreht werden kann. Der Spannbügel 16 kann insbesondere aus einem elastischen, vorspannenden Material, beispielsweise aus einem Kunststoff, ausgebildet sein.

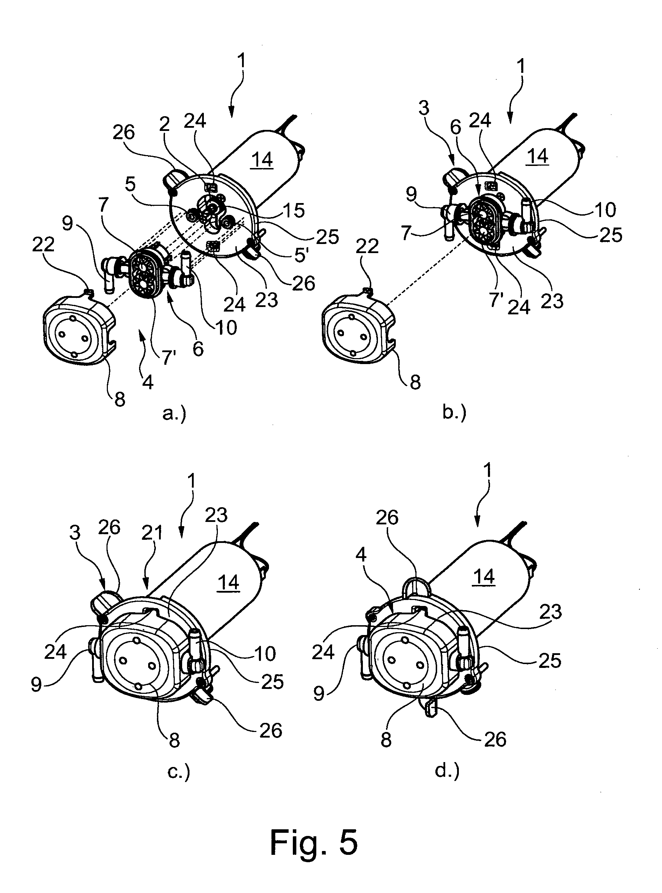

Generell kann die Fixiereinrichtung 3 auch ein in anderer Weise verschließbares Spannelement, z.B. eine Platte, die wie ein Bajonettverschluss 21 (vgl. Fig. 5) fixiert wird oder ein einrastendes Element, oder ein aufschraubbares Element, o.ä. aufweisen. Das Spannelement drückt dabei auf den Deckel 8. Dabei muss das Spannelement nicht oben zentrisch auf den Deckel 8 drücken, sondern kann z.B. auch auf umlaufende/ seitliche Nocken/ Stege wirken. Bei entsprechender Gestaltung kann der Deckel 8 auch Teil des Spannelements bzw. der Fixereinrichtung 3 oder umgekehrt sein.

Am Deckel 8 können darüber hinaus zwei Pins 18 und 18' angeordnet sein, die bei geschlossener Fixiereinrichtung 3 in entsprechende am Spannbügel 16 angeordnete Öffnungen 19, 19' eingreifen und dadurch ein Ausrichten des Deckels 8 und über diesen ein Ausrichten des Pumpenkopfes 4 bewirken. Verwendet werden kann ein derartiges Pumpenmodul 1 an einem Getränkeautomaten 20, insbesondere an einem Kaffeevollautomaten, mit welchem Kaffeemixgetränke wie beispielsweise Cappuccino herstellbar sind. Anstelle der Pins 18 und 18' und den Öffnungen 19,19' können selbstverständlich auch andere formschlüssige Verbindungen (Rippen, Konturen, mechanische Ausprägungen) verwendet werden, die dadurch ein Ausrichten des Deckels 8 und über diesen ein Ausrichten des Pumpenkopfes 4 bewirken.

Mit dem erfindungsgemäßen Pumpenmodul 1 ist ein leicht zu reinigendes, da leicht zu montierendes und leicht zu demontierendes Teil geschaffen, welches insbesondere die hygienischen Verhältnisse im Umgang mit verderblichen Flüssigkeiten, wie beispielsweise Milch, deutlich verbessert. Zudem ist auch eine Wartung und eine Reparatur eines derartigen Pumpenmoduls 1 vergleichsweise einfach, insbesondere sogar für einen Laien, möglich, da ein Zusammenbau bzw. ein Zerlegen des Pumpenmoduls 1 mit nur wenigen Handgriffen möglich ist. Sämtliche Bestandteile, insbesondere des Pumpenkopfes 4, nämlich der Deckel 8, das Pumpengehäuse 6 sowie die Verdrängerelemente 7, 7' sind vergleichsweise einfach aufgebaut und kostengünstig hergestellt, wobei insbesondere der Deckel 8 eben ausgeführt und dadurch ebenfalls leicht zu reinigen und andererseits günstig und prozesssicher zu fertigen ist. Es entstehen bei dem erfindungsgemäßen Pumpenmodul 1 insbesondere keine unerwünschten Toleranzketten durch komplexe Funktionsgeometrien.

Der Getränkeautomat 20 kann sowohl als Träger für das Modul 1 als auch als Träger für die Antriebseinrichtung 14 herangezogen werden, was ein flexible Anordnung sowie mehr konstruktive Freiheiten ermöglicht. Die Antriebseinrichtung 14 und das Pumpenmodul 1 können, müssen dabei aber keine feste Einheit bilden.

Die im Pumpengehäuse 6 angeordneten Verdrängerelemente 7, 7' sind hinsichtlich ihrer Größe vorzugsweise so groß gewählt, dass diese im Normalfall nicht leicht zu verlieren sind und aufgrund ihrer Größe ein vergleichsweise langsam drehender Antrieb zur Förderung der Flüssigkeit ausreicht, wodurch hochfrequente und unangenehme Geräusche vermieden werden können. Eine Abdichtung des Pumpengehäuses kann über gängige und kostengünstige Elastomerdichtungen (O-Ringdichtungen oder Formdichtungen) übernommen werden, wobei ein Anschluss der Zu- und Abführleitung 11, 12 am Zulauf 9 bzw. am Ablauf 10 ohne weitere Dichtungen durch ein einfaches Aufstecken folgen können. Der federbelastete Spannbügel 16 sichert nach dem Verriegeln den Deckel 8 mit ausreichender Kraft auf dem Pumpengehäuse 6 und fixiert zugleich den gesamten Pumpenkopf in seiner Position in der Aufnahme 2. Selbstverständlich kann das Pumpengehäuse 6 weitere Anschlüsse (direkt oder über weitere Übergabestellen) zum Inneren des Getränkeautomaten 20 aufweisen, zum Beispiel zur Zumischung von Zusatzstoffen, Additiven (Sirup/Flavour) oder zur Ableitung von Spülflüssigkeit etc.. Das Pumpenmodul 1 kann auch dazu genutzt werden, konzentrierte Milch zu fördern und gleichzeitig mit Wasser (Heiß- oder Kaltwasser) zu verdünnen.

In den Fig. 5a bis 5d sind einzelne Montageschritte zum Fixieren einer als Bajonettverschluss 21 ausgebildeten Fixiereinrichtung 3 gezeigt. Der Bajonettverschluss 21 weist dabei zumindest zwei Rastelemente 22 auf, die am Deckel 8 angeordnet sind und die eine Stirnfläche 23 der Aufnahme 2 in zugehörigen Öffnungen 24 durchgreifen, sowie einen Drehschieber 25, der drehbar an der Aufnahme 2 angeordnet ist und zumindest einen, im gezeigten Beispiel auch zwei Griffe Flügel 26, über welche ein verdrehen des Drehschiebers 25 bewirkt werden kann. Durch das Verdrehen des Drehschiebers 25 werden die Rastelemente 22 fixiert. Dabei sind in der gezeigten Ausführungsform die Rastelemente 22 am Deckel 8 und die Öffnungen 24 an der Stirnfläche 23 angeordnet sind, wobei selbstverständlich auch eine umgekehrte Anordnung möglich ist.

In den Fig. 5a, b wird somit zunächst der Pumpenkopf 4 in die Aufnahme 2 gesteckt. Anschließend wird gemäß Fig. 5c der Deckel 8 derart auf die Stirnfläche 23 der Aufnahme gesteckt, dass Rastelemente 22, hier zwei an der Zahl, in die zugehörigen Öffnungen 24 eingesteckt sind. Zum Schließen des Bajonettverschlusses 21 wird nun der Drehschieber 25 im Uhrzeigersinn durch ergreifen der Griffe 26 verdreht, so dass die Rastelemente 22 des Deckels 8 hintergriffen und damit der Deckel 8 fixiert werden. Ein Öffnen des Bajonettverschlusses erfolgt in umgekehrter Reihenfolge.

Der große Vorteil des erfindungsgemäßen Pumpenmoduls 1 liegt in dessen kostengünstiger Herstellung sowie geringen Wartungs- und Ersatzteilkosten, da einfache Wartungstätigkeiten, insbesondere vom Anwender selbst durchgeführt werden können. Durch den kompakten Aufbau des Pumpenmoduls 1 ist dessen Einsatz in unterschiedlichsten Anwendungen möglich, was eine deutliche Steigerung der Flexibilität darstellt. Bei einem verstopften Blendenelement 13 lässt sich dieses vergleichsweise einfach entnehmen und separat reinigen, wobei überhaupt der komplette Medienpfad dem Endanwender zugänglich ist, so dass dieser das Ergebnis der Reinigung kontrollieren kann. Sämtliche Komponenten des Pumpenkopfes 4 sind vom Anwender selbst montierbar und demontierbar, so dass kein teurer Servicetechniker erforderlich ist.

## Patentansprüche

1. Pumpenmodul (1) mit einer Aufnahme (2), einer Fixiereinrichtung (3) und einem aus mehreren Komponenten bestehenden Pumpenkopf (4), wobei
- in der Aufnahme (2) zumindest ein Anschluss (5,5') vorgesehen ist,
- der Pumpenkopf (4) zerlegbar und damit leicht reinigbar ist,
- der Pumpenkopf (4) mittels der Fixiereinrichtung (3) in der Aufnahme (2) fixierbar ist und zwar derart, dass zum einen die einzelnen Komponenten des Pumpenkopfes (4) dicht miteinander verklemmt sind und zum anderen der Pumpenkopf (4) dicht mit dem zumindest einen Anschluss (5,5') der Aufnahme (2) verbunden ist.

2. Pumpenmodul nach Anspruch 1,
**dadurch gekennzeichnet,**
**dass** der Pumpenkopf ein Pumpengehäuse (6), zwei darin gelagerte Verdrängerelemente (7,7'), insbesondere zwei Zahnräder, und einen das Pumpengehäuse (6) verschließenden Deckel (8) umfasst.

3. Pumpenmodul nach Anspruch 2,
**dadurch gekennzeichnet,**
- **dass** am Pumpengehäuse (6) ein Zulauf (9) und ein Ablauf (10) angeordnet sind, und/oder
- **dass** am Pumpengehäuse (6) weitere Anschlüsse (direkt oder über weitere Übergabestellen) zum Inneren des Getränkeautomaten (20) vorgesehen sind, insbesondere zur Zumischung von Zusatzstoffen, Additiven (Sirup/Flavour), konzentrierter Milch oder zur Ableitung von Spülflüssigkeit.

4. Pumpenmodul nach Anspruch 2 oder 3,
**dadurch gekennzeichnet,**
**dass** eine Antriebseinrichtung (14) vorgesehen ist, die mit der Aufnahme (2) verbindbar ist und über die die Verdrängerelemente (7,7') insbesondere berührungslos antreibbar sind.

5. Pumpenmodul nach einem der Ansprüche 1 bis 4,
**dadurch gekennzeichnet,**
- **dass** die Fixiereinrichtung (3) als Bajonettverschluss (21) oder als Rastelement ausgebildet ist, oder
- **dass** die Fixiereinrichtung (3) einen Schnellverschluss, insbesondere einen schwenkbaren Spannbügel (16), aufweist, mit dem der Pumpenkopf (4) in die Aufnahme (2) eindrückbar ist und der in der verriegelten Position, insbesondere mittels des Riegels (17), fixierbar ist.

6. Pumpenmodul nach einem der Ansprüche 3 bis 5,
**dadurch gekennzeichnet,**
**dass** ein Blendenelement (13) vorgesehen ist, welches am Ablauf (10) des Pumpenkopfes (4) anschließbar ist.

7. Pumpenmodul nach einem der Ansprüche 1 bis 6,
**dadurch gekennzeichnet,**
**dass** in der Aufnahme (2) ein Anschluss (5') für ein Schäumgas oder Reinigungsmedium und ein Anschluss (5) für ein Reinigungsmedium oder ein Schäumgas vorgesehen ist.

8. Pumpenmodul nach Anspruch 7,
**dadurch gekennzeichnet,**
**dass** das Pumpengehäuse (6) Durchgangsöffnungen für den Schäumgasanschluss (5') und den Reinigungsmediumanschluss (5) sowie für eine Antriebswelle (15) der Antriebseinrichtung (14) aufweist.

9. Pumpenmodul nach einem der Ansprüche 5 bis 8,
**dadurch gekennzeichnet,**
**dass** am Deckel (8) zwei Pins (18,18') angeordnet sind, die bei geschlossener Fixiereinrichtung (3) in entsprechende am Spannbügel (16) angeordnete Öffnungen (19,19') eingreifen.

10. Pumpenmodul nach einem der Ansprüche 5 bis 8,
**dadurch gekennzeichnet,**
**dass** der Bajonettverschluss (21) zumindest zwei Rastelemente (22), die am Deckel (8) angeordnet sind und die eine Stirnfläche (23) der Aufnahme (2) in zugehörigen Öffnungen (24) durchgreifen, aufweist, sowie einen Drehschieber (25), der drehbar an der Aufnahme (2) angeordnet ist und zumindest einen Griff (26) aufweist, wobei ein Verdrehen des Drehschiebers (25) ein Fixieren der Rastelemente (22) bewirkt.

11. Getränkeautomat (20), insbesondere ein Kaffeevollautomat, mit einem Pumpenmodul (1) nach einem der Ansprüche 1 bis 10.

## Claims

1. A pump module (1) comprising an accommodation (2), a fixing device (3) and a pump head (4), which consists of a plurality of components, wherein
- provision is made in the accommodation (2) for at least one connection (5, 5'),
- the pump head (4) can be taken apart and can thus be cleaned easily,
- the pump head (4) can be fixed in the accommodation (2) by means of the fixing device (3), namely such that, on the one hand, the individual components of the pump head (4) are clamped firmly together and, on the other hand, the pump head (4) is connected firmly to the at least one connection (5, 5') of the accommodation (2).

2. The pump module according to claim 1,
**characterized in**
**that** the pump head comprises a pump housing (6), two displacement elements (7, 7'), which are supported therein, in particular two gear wheels, and a cover (8), which closes the pump housing (6).

3. The pump module according to claim 2,
**characterized in**
- **that** an inlet (9) and an outlet (10) are arranged at the pump housing (6), and/or
- **that** provision is made at the pump housing (6) for further connections (directly or above further transfer locations) to the interior of the beverage machine (20), in particular for adding admixtures, additives (syrup/flavor), concentrated milk or for discharging rinsing liquid.

4. The pump module according to claim 2 or 3,
**characterized in**
**that** provision is made for a drive device (14), which can be connected to the accommodation (2) and via which the displacement elements (7, 7') can be driven, in particular in a contact-free manner.

5. The pump module according to one of claims 1 to 4,
**characterized in**
- **that** the fixing device (3) is embodied as bayonet closure (21) or as latching element, or
- **that** the fixing device (3) encompasses a quick-release fastener, in particular a pivotable latch fastener (16), by means of which the pump head (4) can be pressed into the accommodation (2), and which can be fixed in the locked position, in particular by means of the bolt (17).

6. The pump module according to one of claims 3 to 5,
**characterized in**
**that** provision is made for a faceplate element (13), which can be connected to the outlet (10) of the pump head (4).

7. The pump module according to one of claims 1 to 6,
**characterized in**
**that** provision is made in the accommodation (2) for a connection (5') for a frothing gas or cleaning medium and for a connection (5) for a cleaning medium or a frothing gas.

8. The pump module according to claim 7,
**characterized in**
**that** the pump housing (6) encompasses through holes for the frothing gas connection (5') and the cleaning medium connection (5) as well as for a driveshaft (15) of the drive device (14).

9. The pump module according to one of claims 5 to 8,
**characterized in**
**that** two pins (18, 18'), which, when the fixing device (3) is closed, engage with corresponding openings (19, 19'), which are arranged at the latch fastener (16), are arranged at the cover (8).

10. The pump module according to one of claims 5 to 8,
**characterized in**
**that** the bayonet closure (21) encompasses at least two latching elements (22), which are arranged at the cover (8) and which pass through a front surface (23) of the accommodation (2) in corresponding openings (24), as well as a rotary valve (25), which is arranged at the accommodation (2) so as to be capable of being rotated, and at least one handle (26), wherein a twisting of the rotary valve (25) results in a fixing of the latching elements (22).

11. A beverage machine (20), in particular a fully-automatic coffee machine, comprising a pump module (1) according to one of claims 1 to 10.

## Revendications

1. Module de pompe (1) avec un logement (2), un système de fixation (3) et une tête de pompe (4) constituée de plusieurs composants
- dans le logement (2) étant prévu au moins un raccord (5, 5'),
- la tête de pompe (4) étant démontable et donc facile à nettoyer,
- la tête de pompe (4) pouvant être fixée dans le logement (2) au moyen du système de fixation (3), à savoir de sorte que d'une part, les composants individuels de la tête de pompe (4) soient stabilisés de manière étanche les uns avec les autres et que d'autre part la tête de pompe (4) soit reliée de manière étanche avec l'au moins un raccord (5, 5') du logement (2).

2. Module de pompe selon la revendication 1, **caractérisé en ce que** la tête de pompe comprend un carter de pompe (6), deux éléments déplaceurs (7, 7') logés dans ce dernier, notamment deux roues dentées et un couvercle (8) fermant le carte de pompe (6).

3. Module de pompe selon la revendication 2, **caractérisé en ce que**
- sur le carter de pompe (6) sont placées une arrivée (9) et une évacuation (10) et/ou
- sur le carter de pompe (6) sont prévus (directement ou par l'intermédiaire de deux points de transfert supplémentaires) des raccords supplémentaires vers l'intérieur du distributeur de boissons (20), notamment pour l'ajout par mélange de produits supplémentaires, d'additifs (sirop, saveur), de lait concentré ou pour dériver du liquide de rinçage.

4. Module de pompe selon la revendication 2 ou la revendication 3, **caractérisé en ce qu'**il est prévu un dispositif d'entraînement (14) que l'on peut relier avec le logement (2) et par l'intermédiaire duquel les éléments déplaceurs (7, 7') peuvent être entraînés, notamment sans contact.

5. Module de pompe selon l'une quelconque des revendications 1 à 4, **caractérisé**
- **en ce que** le système de fixation (3) est conçu en tant que fermeture à baïonnette (21) ou en tant qu'élément d'enclenchement ou
- **en ce que** le système de fixation (3) comporte une fermeture rapide, notamment un étrier de serrage (16) pivotant, à l'aide duquel on peut enfoncer la tête de pompe (4) dans le logement (2) et qui peut se fixer dans la position verrouillée, notamment au moyen du verrou (17).

6. Module de pompe selon l'une quelconque des revendications 3 à 5, **caractérisé en ce qu'**il est prévu un élément cache (13) que l'on peut raccorder sur l'évacuation (10) de la tête de pompe (4).

7. Module de pompe selon l'une quelconque des revendications 1 à 6, **caractérisé en ce que** dans le logement (2) est prévu un raccord (5') pour un gaz émulsionneur ou pour un fluide nettoyant et un raccord (5) pour un fluide nettoyant ou pour un gaz émulsionneur.

8. Module de pompe selon la revendication 7, **caractérisé en ce que** le carter de pompe (6) comporte des orifices de passage pour le raccord (5') de gaz émulsionneur et le raccord (5) de fluide nettoyant, ainsi que pour un arbre d'entraînement (15) du système d'entraînement (14).

9. Module de pompe selon l'une quelconque des revendications 5 à 8, **caractérisé en ce que** sur le couvercle (8) sont placés deux ergots (18, 18'), qui lorsque le système de fixation (3) est fermé s'engagent dans des orifices (19, 19') correspondants placés sur l'étrier de serrage (16).

10. Module de pompe selon l'une quelconque des revendications 5 à 8, **caractérisé en ce que** la fermeture à baïonnette (21) comporte au moins deux éléments d'enclenchement (22) qui sont placés sur le couvercle (8) et qui traversent une surface frontale (23) du logement (2) dans des orifices (24) associés, ainsi qu'un coulisseau rotatif (25) qui est placé de manière rotative sur le logement (2) et qui comporte au moins une poignée (26), une rotation du coulisseau rotatif (25) provoquant une fixation des éléments d'enclenchement (22).

11. Distributeur de boissons (20), notamment distributeur automatique de boissons, avec un module de pompe (1) selon l'une quelconque des revendications 1 à 10.
